# EUROPÄISCHE PATENTSCHRIFT

(11) **EP 2 713 145 B1**
(45) Veröffentlichungstag und Bekanntmachung des Hinweises auf die Patenterteilung: **06.12.2017**
(21) Anmeldenummer: 13003944.9
(22) Anmeldetag: 07.08.2013
(51) Int. Cl.: G01F 1/84

(54) **Coriolis-Massedurchflussmessgerät**
Coriolis mass flowmeter
Débitmètre massique du type Coriolis

(30) Priorität: 27.09.2012 DE 102012018988
(43) Veröffentlichungstag der Anmeldung: 02.04.2014
(73) Patentinhaber: Krohne AG, 4019 Basel (CH)
(72) Erfinder: Hussain, Yousif, Dr., NN 3 3 D Weston Favell, Northampton (GB); Rolph, Christopher, Hartwell, NN7 2HA Northants (GB)
(74) Vertreter: Gesthuysen Patent- und Rechtsanwälte

(56) Entgegenhaltungen:
- WO-A1-2012/005735
- DE-A1-102004 053 883
- DE-A1-102010 018 223
- JP-A- 2006 133 244
- US-A- 5 301 557
- US-A1- 2005 039 547
- US-A1- 2007 095 151

## Beschreibung

Die Erfindung betrifft ein Coriolis-Massedurchflussmessgerät, mit mindestens einem gebogenen Messrohr, mindestens einem Schwingungserzeuger, mindestens einem Schwingungsaufnehmer, mindestens einer Messgeräteelektronik und einem Gehäuse.

Coriolis-Massedurchflussmessgeräte sind im Stand der Technik in einer Vielzahl von Ausgestaltungen bekannt. Massedurchflussmessgeräte, die nach dem Coriolis-Prinzip arbeiten, weisen üblicherweise wenigstens einen Schwingungserzeuger, mit dem die Messrohre zu Schwingungen angeregt werden, sowie häufig zwei Schwingungsaufnehmer, mit denen die erzielte Schwingung oder die erzielten Schwingungen der Messrohre erfasst werden, auf. Die Schwingungsaufnehmer sind üblicherweise ein- und auslaufseitig an den Messrohren befestigt. Ohne Durchfluss sind die Signale der beiden Schwingungsaufnehmer im Wesentlichen phasengleich. Bei einem Massedurchfluss ergibt sich ein- und auslaufseitig eine unterschiedliche Corioliskraft, die zu einer Phasenverschiebung der beiden Signale der Schwingungsaufnehmer führt, wobei die Phasenverschiebung proportional dem Massedurchfluss innerhalb des Messrohrs ist.

Die Schwingungserzeuger und die Schwingungsaufnehmer sind meist derart aufgebaut, dass sie beispielsweise einen Permanentmagneten sowie eine Magnetspule aufweisen, um auf elektrischem Wege Schwingungen auf die Messrohre zu übertragen bzw. Schwingungen der Messrohre zu erfassen.

Der Anmelderin sind aus der Praxis Coriolis-Massedurchflussmessgeräte mit gebogenen Messrohren bekannt, die ein Gehäuse aufweisen, das die Messrohre umgibt. Derartige Gehäuse sind beispielsweise als Blechbauteile mit einer separaten Tragkonstruktion - oft als Brücke bezeichnet - ausgebildet, an der die Messrohre gehalten sind. Um eine Beschädigung des Gehäuses bei einem ungewollten Mediumsaustritt aus dem Messrohr, beispielsweise bei einer Leckage, zu verhindern, weisen derartige Gehäuse beispielsweise ein Überdruckventil auf, dass bei einem bestimmten Schwellenwert den Druck im Gehäuse abbaut und dadurch eine Beschädigung des Gehäuses verhindert. Derartige Lösungen sind für Anwendungen, bei denen beispielsweise der Austritt des Messmediums in die Umgebung auf jeden Fall zu verhindern ist, nicht geeignet; dies betrifft beispielsweise Anwendungen im Kraftwerksbereich.

Gehäuse für Coriolis-Massedurchflussmessgeräte sind aus US 2007/095151 A1, US 5 301 557 A, DE 10 2004 053883 A1, DE 10 2010 018223 A1, US 2005/039547 A1, WO 2012/005735 und JP 2006 133244 A bekannt. Aus dem Stand der Technik bekannte Coriolis-Massedurchflussmessgeräte weisen den Nachteil auf, dass bei bekannten Gehäusen trotz des Überdruckventils insbesondere bei sehr hohen Drücken, beispielsweise von bis zu 300 bar, eine Verformung des Gehäuses oder sogar eine Zerstörung auftreten kann. Auch im umgekehrten Fall einer erheblichen Druckbelastung von außen sind aus dem Stand der Technik bekannte Gehäuselösungen für Hochdruckanwendungen nicht hinreichend stabil.
Der Erfindung liegt daher die Aufgabe zugrunde, ein Coriolis-Massedurchflussmessgerät anzugeben, das ein Gehäuse mit einer gesteigerten Druckfestigkeit aufweist, insbesondere gegen äußere Drücke.
Die vorgenannte Aufgabe ist gemäß der vorliegenden Erfindung zunächst und im Wesentlichen dadurch gelöst, dass das Gehäuse eine erste Gehäuseschale und eine zweite Gehäuseschale umfasst, dass die erste Gehäuseschale und die zweite Gehäuseschale das Messrohr vollständig umschließen, so dass die erste Gehäuseschale und die zweite Gehäuseschale mindestens einen ersten druckfesten Hohlraum um das Messrohr ausbilden, und dass die erste Gehäuseschale und die zweite Gehäuseschale zwischen Einlauf und Auslauf des Messrohrs einen Steg bilden, der sich als massiver Querschnitt zwischen Einlauf und Auslauf erstreckt, wobei der Steg eine unmittelbare Abstützung, nämlich eine direkte und geradlinige Stützverbindung, zwischen Anschlussflächen am Einlauf und am Auslauf realisiert, und dass sich der Steg zumindest teilweise im Bereich einer direkten Verbindungslinie zwischen Einlauf und Auslauf des Messrohrs erstreckt.

Das Coriolis-Massedurchflussmessgerät weist mindestens ein gebogenes Messrohr auf, das sich zwischen Einlauf und Auslauf erstreckt und beispielsweise U- oder V-förmig gebogen ist. Vorzugsweise weist das Coriolis-Massedurchflussmessgerät mindestens zwei gebogene Messrohre auf. Die beiden Messrohre verlaufen vorteilhaft zwischen Einlauf und Auslauf der Messrohre parallel zueinander. Einlaufseitig und auslaufseitig sind die Messrohre beispielsweise einzeln angeschlossen oder werden alternativ in einem Sammler, der auch mit einem Flansch kombiniert sein kann, zusammengefasst.
An den Messrohren bzw. an dem Messrohr ist mindestens ein Schwingungserzeuger und sind vorzugsweise zwei Schwingungsaufnehmer mittels aus dem Stand der Technik bekannter Haltevorrichtungen befestigt, so dass das Messrohr mit dem Schwingungserzeuger zu Schwingungen anregbar ist und die Schwingungen mit den einlaufseitig und auslaufseitig angeordneten Schwingungsaufnehmern erfassbar sind. Das Gehäuse, in dem das Messrohr angeordnet ist, umfasst eine erste Gehäuseschale und eine zweite Gehäuseschale, die zu dem Gehäuse zusammengefügt sind. Vorzugsweise besteht das Gehäuse aus erster Gehäuseschale und zweiter Gehäuseschale. Die erste Gehäuseschale und die zweite Gehäuseschale umschließen das Messrohr vollständig zwischen Einlauf und Auslauf, so dass das Messrohr lediglich am Einlauf und am Auslauf mittelbar oder unmittelbar aus dem Gehäuse herausragt. Das Messrohr ist am Einlauf und Auslauf jedenfalls derart zugänglich, dass es an ein das Coriolis-Massedurchflussmessgerät umgebendes Rohrleitungssystem mittelbar oder unmittelbar anschließbar ist.

Die erste Gehäuseschale und die zweite Gehäuseschale bilden mindestens einen ersten druckfesten Hohlraum um das Messrohr, so dass einerseits das Messrohr vor äußeren Überdrücken geschützt ist, andererseits aber auch innere Überdrücke, die beispielsweise durch eine Beschädigung des Messrohrs erfolgen können, von dem Gehäuse ohne Beschädigung aufgenommen werden. Dazu ist beispielsweise mindestens in der ersten Gehäuseschale und/oder mindestens in der zweiten Gehäuseschale mindestens eine Ausnehmung vorgesehen, die durch zumindest einen Teil des ersten druckfesten Hohlraums gebildet ist. Die erste Gehäuseschale und die zweite Gehäuseschale sind zur Bildung des ersten druckfesten Hohlraums derart ausgestaltet, dass sie einem sehr hohen inneren Druck oder einem sehr hohen äußeren Druck widerstehen können, beispielsweise Drücken in der Größenordnung von 300 bar. Dazu sind die erste Gehäuseschale und die zweite Gehäuseschale vorzugsweise einstückig ausgebildet.

Innerhalb des ersten druckfesten Hohlraums ist neben dem Messrohr bzw. den Messrohren mit dem daran angeordneten Schwingungserzeuger und den Schwingungsaufnehmern vorzugsweise auch die Messgeräteelektronik angeordnet, so dass die Messgeräteelektronik zumindest vor äußerem Druck geschützt ist. Die Anschlüsse der Messgeräteelektronik werden beispielsweise über eine druckfeste Durchführung durch das Gehäuse, insbesondere durch die erste Gehäuseschale und/oder durch die zweite Gehäuseschale, hindurchgeführt.

Des Weiteren ist vorgesehen, dass die erste Gehäuseschale und die zweite Gehäuseschale zwischen Einlauf und Auslauf des Messrohrs einen Steg bilden. Der Steg wird beispielsweise auch als Brücke bezeichnet und erstreckt sich als massiver Querschnitt - massiver Steg - zwischen dem Einlauf und dem Auslauf des Messrohrs. Der Steg wird beispielsweise durch materialstarke oder durch Streben verstärkte Bereiche der ersten Gehäuseschale und/oder der zweiten Gehäuseschale gebildet, so dass er durch das Zusammenfügen der ersten und der zweiten Gehäuseschale ausgebildet wird. Der Steg stabilisiert das Gehäuse und führt dazu, dass die Enden des Messrohrs einlaufseitig und auslaufseitig in einer festen Position relativ zueinander gehalten werden. Ein massiver Steg minimiert zudem die Übertragung von Schwingungen von dem Coriolis-Massedurchflussmessgerät auf die das Coriolis-Massedurchflussmessgerät umgebenden Rohrleitungen. Um den massiven Steg auszubilden, sind die erste Gehäuseschale und/oder die zweite Gehäuseschale beispielsweise zwischen Einlauf und Auslauf des Messrohrs zumindest teilweise mit einer im Vergleich zum sonstigen Gehäuse gesteigerten Materialstärke ausgebildet. Der Steg ist zudem dadurch gekennzeichnet, dass er eine unmittelbare Abstützung, nämlich eine direkte und geradlinige Stützverbindung, zwischen den Anschlussflächen am Einlauf und am Auslauf realisiert.
Im Montagezustand sind die erste Gehäuseschale und die zweite Gehäuseschale vorzugsweise mit einer umlaufenden Schweißnaht miteinander verschweißt, wodurch das Gehäuse eine zusätzliche Stabilität aufweist. Wahlweise ist zwischen der ersten Gehäuseschale und der zweiten Gehäuseschale eine Dichtung angeordnet, die die Druckfestigkeit des ersten Hohlraums für sehr hohe Drücke gewährleistet, sofern die Gehäuseschalen nicht miteinander verschweißt sind. Die erste und die zweite Gehäuseschale sind insbesondere aus einem rostfreien Stahl hergestellt und beispielsweise aus Vollmaterial gefräst oder durch Urformen, beispielsweise Gießen, und anschließende Nachbearbeitung gefertigt.
Ein Coriolis-Massedurchflussmessgerät mit einem derartigen Gehäuse eignet sich insbesondere für die Anwendung in Bereichen, in denen sehr hohe Au-ßendrücke auf das Gehäuse einwirken, beispielsweise in sehr tiefen Gewässern bei der Öl- oder Gasförderung. Insbesondere durch den Steg erfolgt eine Versteifung des Gehäuses und eine ausgleichende Kraftübertragung zwischen Einlauf und Auslauf, wodurch die Wahrscheinlichkeit einer Verformung des Gehäuses minimiert wird.

Um die Montage des Coriolis-Massedurchflussmessgeräts zu vereinfachen, ist gemäß einer ersten bevorzugten Ausgestaltung vorgesehen, dass die erste Gehäuseschale und die zweite Gehäuseschale in einer Fügeebene zusammengefügt sind, und dass die Fügeebene parallel zu einer durch die Messrohrmittelachse gebildeten Ebene E verläuft. Die Messrohrmittelachse des U- oder V-förmig gebogenen Messrohrs spannt eine Ebene E auf, zu der die Fügeebene der ersten Gehäuseschale und der zweiten Gehäuseschale parallel verläuft. Bei zwei Messrohren ist vorzugsweise vorgesehen, dass die Fügeebene der ersten Gehäuseschale und der zweiten Gehäuseschale exakt in der Mitte zwischen den durch das erste Messrohr und das zweite Messrohr aufgespannten Ebenen E angeordnet ist. Zur Montage des Coriolis-Massedurchflussmessgeräts wird beispielsweise das Messrohre zusammen mit dem Schwingungserzeuger und den Schwingungsaufnehmern sowie der Messgeräteelektronik in der zweiten Gehäuseschalten angeordnet, wobei anschließend eine Abdeckung mittels der ersten Gehäuseschale erfolgt. Abschließend werden die erste Gehäuseschale und die zweite Gehäuseschale mit einer Schweißnaht, die in der Fügeebene umlaufend verläuft, miteinander verschweißt.

Die Stabilität des Gehäuses des Coriolis-Massedurchflussmessgeräts lässt sich gemäß einer nächsten Ausgestaltung weiter dadurch steigern, dass die Kontaktfläche zwischen erster Gehäuseschale und zweiter Gehäuseschale etwa 20 % bis 60 % der Gesamtfläche des Gehäuses im Querschnitt in der Fügeebene beträgt. Die Fügeebene ist die Ebene, in der die erste Gehäuseschale und die zweite Gehäuseschale zusammengefügt werden. Die Kontaktfläche ist die Fläche, mit der die erste Gehäuseschale und die zweite Gehäuseschale unmittelbar miteinander in Kontakt stehen. Im weitesten Sinne also folglich die Gesamtfläche im Querschnitt in der Fügeebene abzüglich der für den ersten druckfesten Hohlraum vorhandenen Ausnehmungen in der ersten Gehäuseschale und/oder in der zweiten Gehäuseschale. Die Stabilität des Gehäuses des Coriolis-Massedurchflussmessgerätes wird durch eine möglichst große Kontaktfläche zwischen erster Gehäuseschale und zweiter Gehäuseschale gesteigert, da damit auch eine Erhöhung der Wandstärke der ersten Gehäuseschale und/oder der zweiten Gehäuseschale zumindest in der Fügeebene einhergeht. Ganz besonders bevorzugt ist eine Kontaktfläche zwischen erster Gehäuseschale und zweiter Gehäuseschale von etwa 35 %. Je größer die Kontaktfläche, desto kleiner ist der erste druckfeste Hohlraum im Verhältnis zur Gesamtfläche des Gehäuses im Querschnitt in der Fügeebene.

Um beispielsweise zu verhindern, dass bei Austritt des Mediums aus dem Messrohr die Messgeräteelektronik beschädigt wird, ist gemäß einer weiteren Ausgestaltung vorgesehen, dass die erste Gehäuseschale und die zweite Gehäuseschale einen zweiten druckfesten Hohlraum ausbilden, insbesondere, dass in dem zweiten Hohlraum die Messgeräteelektronik angeordnet ist. Die erste Gehäuseschale und/oder die zweite Gehäuseschale weisen dazu mindestens eine weitere Ausnehmung auf, die im Montagezustand neben dem ersten druckfesten Hohlraum den zweiten druckfesten Hohlraum innerhalb des Gehäuses ausbildet. Vorzugsweise ist der erste Hohlraum von dem zweiten Hohlraum vollständig abgeschlossen, wobei lediglich beispielsweise eine fluid- und druckdichte Durchführung für die Anschlussleitungen der Schwingungserzeuger und der Schwingungsaufnehmer sowie ggf. für weitere erforderliche Anschlussleitungen vorgesehen ist. Der zweite Hohlraum ist vorzugsweise im Zwischenraum des U- oder V-förmig gebogenen Messrohrs vorgesehen. Die Größe des zweiten Hohlraums entspricht im Wesentlichen der für die Messgeräteelektronik erforderlichen Größe. Eine derartige Ausgestaltung weist den Vorteil auf, dass das Messrohr separat zur Messgeräteelektronik von dem Gehäuse, insbesondere nämlich von der ersten Gehäuseschale und der zweiten Gehäuseschale, umkapselt ist.

Die Druckfestigkeit des Gehäuses lässt sich gemäß einer nächsten Ausgestaltung weiter dadurch steigern, dass der erste Hohlraum und/oder der zweite Hohlraum eine minimale Größe aufweisen, insbesondere, dass der erste Hohlraum und/oder der zweite Hohlraum das Messrohr und/oder die Messgeräteelektronik eng anliegend umschließt. Der erste Hohlraum und/oder der zweite Hohlraum weisen folglich eine Größe auf, die gerade ausreicht bzw. erforderlich ist, um dem Messrohr eine Schwingung zu ermöglichen bzw. um die Messgeräteelektronik zu montieren. Je kleiner der erste Hohlraum und/oder der zweite Hohlraum ausgebildet sind, desto größer ist die Kontaktfläche zwischen erster Gehäuseschale und zweiter Gehäuseschale, wodurch die Druckfestigkeit des Gehäuses weiter gesteigert wird. Das Messrohr wird vom ersten Hohlraum derart eng anliegend umschlossen, dass eine Schwingung des Messrohrs ermöglicht ist, jedoch kein nicht erforderlicher Freiraum um das Messrohr herum vorgesehen ist.

Das Zusammenfügen des Gehäuses des Coriolis-Massedurchflussmessgeräts wird gemäß einer weiteren Ausgestaltung dadurch vereinfacht, dass die erste Gehäuseschale und die zweite Gehäuseschale zumindest teilweise formschlüssig miteinander verbunden sind, insbesondere, dass mindestens ein Bolzen zwischen erster Gehäuseschale und zweiter Gehäuseschale vorgesehen ist. Vorzugsweise sind mindestens drei, insbesondere mindestens vier Bolzen, zwischen erster Gehäuseschale und zweiter Gehäuseschale vorgesehen. Zur Montage der Bolzen sind beispielsweise in der ersten Gehäuseschale und/oder in der zweiten Gehäuseschale eine der Anzahl der Bolzen entsprechende Anzahl an Sacklöchern vorgesehen, in die die Bolzen einsteckbar sind. Die Bolzen dienen somit u. a. zur Positionierung der ersten Gehäuseschale relativ zur zweiten Gehäuseschale und führen zu einer Stabilisierung des Gehäuses. Vorzugsweise ist auch vorgesehen, dass die Bolzen auf mindestens einer Seite schraubbar sind, so dass die Bolzen beispielsweise in die erste Gehäuseschale oder in die zweite Gehäuseschale eingeschraubt werden, wobei in die jeweils andere Gehäuseschale lediglich ein Einstecken erfolgt. Die Bolzen sind vorzugsweise im Bereich der Kontaktfläche zwischen erster Gehäuseschale und zweiter Gehäuseschale vorgesehen.

Insbesondere um eine Verformung des Gehäuses unter Druckeinwirkung im Bereich des ersten Hohlraums und/oder des zweiten Hohlraums zu verhindern, ist gemäß einer weiteren Ausgestaltung vorgesehen, dass die erste Gehäuseschale und die zweite Gehäuseschale mit mindestens einem Schraubbolzen miteinander verbunden sind, insbesondere, dass der Schraubbolzen sowohl mit der ersten Gehäuseschale als auch mit der zweiten Gehäuseschale verschraubt ist. Der Schraubbolzen ist vorzugsweise im Bereich des ersten Hohlraums und/oder des zweiten Hohlraums angeordnet, wobei dadurch, dass der Schraubbolzen sowohl mit der ersten Gehäuseschale als auch mit der zweiten Gehäuseschale verbunden ist, sich die Gehäuseschalen über den Schraubbolzen gegenseitig abstützen. Insbesondere bei äußerem Druck auf das Gehäuse erfolgt eine gegenseitige Abstützung über den Schraubbolzen, wobei insbesondere mindestens zwei symmetrisch angeordnete Schraubbolzen vorgesehen sind. Der Schraubbolzen weist in seinem Endbereich vorzugsweise jeweils ein Gewinde auf, so dass er über Bohrungen mit Innengewinden in der ersten Gehäuseschale und der zweiten Gehäuseschale, vorzugsweise in Bohrungen, die orthogonal zur Fügeebene angeordnet sind, einschraubbar ist. Durch gegenläufige Gewinde, nämlich ein Linksgewinde an einem Ende und ein Rechtsgewinde an dem anderen Ende, ist der Schraubbolzen gleichzeitig in die erste Gehäuseschale und die zweite Gehäuseschale einschraubbar, wobei durch ein Festschrauben des Schraubbolzens vorzugsweise eine Zugkraft zwischen erster Gehäuseschale und zweiter Gehäuseschale hervorgerufen wird.

Zu Wartungs- und Montagezwecken ist gemäß einer weiteren Ausgestaltung vorgesehen, dass mindestens in der ersten Gehäuseschale und/oder mindestens in der zweiten Gehäuseschale mindestens eine Öffnung vorgesehen ist, und dass durch die Öffnung mindestens ein Schwingungserzeuger und/oder mindestens ein Schwingungsaufnehmer zugänglich ist, bevorzugt, dass die Öffnung orthogonal zu der durch die Messrohrmittelachse gebildete Ebene E angeordnet ist. Um beispielsweise bei montiertem Gehäuse des Coriolis-Massedurchflussmessgeräts, insbesondere bei miteinander verschweißter erster und zweiter Gehäusehälfte, eine Montage oder einen Austausch des Schwingungserzeugers und/oder der Schwingungsaufnehmer vornehmen zu können, ist in der ersten Gehäusehälfte und/oder in der zweiten Gehäusehälfte mindestens eine Öffnung vorgesehen, die mit einer Schraube, insbesondere einer Madenschraube, verschließbar ist. Dazu weist die Öffnung ein Innengewinde auf. Die Öffnung ist in der ersten Gehäuseschale oder in der zweiten Gehäuseschale derart vorgesehen, dass sie exakt derart angeordnet ist, dass der Schwingungserzeuger und/oder die Schwingungsaufnehmer zugänglich sind. Vorzugsweise ist für jeden Schwingungsaufnehmer und jeden Schwingungserzeuger eine separate Öffnung vorgesehen.

Die Herstellung des Coriolis-Massedurchflussmessgeräts lässt sich gemäß einer weiteren Ausgestaltung vorteilhaft dadurch vereinfachen, dass die erste Gehäuseschale und die zweite Gehäuseschale bezüglich ihrer Grundform identisch ausgebildet sind. Die erste Gehäuseschale und die zweite Gehäuseschale können folglich bezüglich ihrer Grundform als identische Bauteile hergestellt werden, wobei anschließend lediglich unterschiedliche Bohrungen zur Befestigung oder zur Herstellung der Öffnungen vorgesehen werden.

Ein Steg mit einem bevorzugten Querschnitt lässt sich dadurch erhalten, dass sich der Steg zumindest teilweise im Bereich einer gedachten direkten Verbindungslinie zwischen Einlauf und Auslauf des Messrohrs erstreckt. Wenn das Messrohr gebogen ist, lässt sich eine gedachte direkte Verbindungslinie zwischen Einlauf und Auslauf des Messrohrs konstruieren, die die kürzeste - gedachte - Verbindung zwischen Einlauf und Auslauf darstellt. Der Querschnitt des Steges lässt sich dadurch steigern, dass sich der Steg zumindest teilweise in den Bereich der gedachten Verbindungslinie, also die gedachte Verbindungslinie überschneidend, erstreckt.
Die Stabilität des Gehäuses des Coriolis-Massedurchflussmessgeräts lässt sich auch gemäß einer weiteren Ausgestaltung steigern, indem vorgesehen ist, dass die den Hohlraum begrenzende Wandstärke in der Fügeebene im Bereich des Steges zumindest teilweise größer als in den sonstigen Bereichen der ersten Gehäuseschale und/oder der zweiten Gehäuseschale ist. Mit der Wandstärke ist dabei die in der Fügeebene liegende Wandstärke der ersten Gehäuseschale und/oder der zweiten Gehäuseschale gemeint. Diese Wandstärke übersteigt im Bereich des Steges zumindest teilweise die größte Wandstärke des Gehäuses in den sonstigen Bereichen.
Die Druckfestigkeit des Gehäuses lässt sich auch weiter dadurch steigern, dass die minimale Wandstärke des Gehäuses etwa dem doppelten Messrohrdurchmesser entspricht. Die minimale Wandstärke, d. h. die dünnste Stelle des Gehäuses an erster Gehäuseschale und/oder zweiter Gehäuseschale entspricht folglich mindestens dem doppelten Messrohrdurchmesser, wodurch sichergestellt ist, dass das Gehäuse eine ausreichende Druckfestigkeit aufweist.
Die Stabilität des Gehäuses gegen sehr hohen äußeren oder inneren Druck lässt sich gemäß einer letzten Ausgestaltung weiter dadurch steigern, dass mindestens die erste Gehäuseschale und/oder mindestens die zweite Gehäuseschale mindestens eine Verstärkungsrippe aufweist, insbesondere, dass die Verstärkungsrippe an einer Außenfläche angeordnet ist. Die Verstärkungsrippe ist beispielsweise einstückig mit der ersten Gehäuseschale und/oder der zweiten Gehäuseschale ausgebildet oder nachträglich beispielsweise durch stoffschlüssige Verbindung, insbesondere Schweißen, an die erste Gehäuseschale und/oder die zweite Gehäuseschale angefügt. Je nach Verwendung des Coriolis-Massedurchflussmessgeräts ist die mindestens eine Verstärkungsrippe, vorzugsweise eine Vielzahl an Verstärkungsrippen, auf einer Innenfläche oder einer Außenfläche des Gehäuses angeordnet. Vorzugsweise ist die Verstärkungsrippe an einer Außenfläche der ersten Gehäuseschale und/oder der zweiten Gehäuseschale angeordnet, so dass das Gehäuse vorteilhaft einem äußeren Druck standhält. Dadurch, dass die Verstärkungsrippe außerhalb des Gehäuses angeordnet ist, kann zu dem Platz innerhalb des Gehäuses gespart werden, wodurch der Hohlraum oder die Hohlräume auf ein geringes Volumen reduziert werden können. Als besonders vorteilhaft haben sich zwei parallel angeordnete Verstärkungsrippen herausgestellt.

Erfindungsgemäß ausgestaltete Coriolis-Massedurchflussmessgeräte bzw. erfindungsgemäß ausgestaltete Gehäuse für Durchflussmessgeräte gestatten den Einsatz von Durchflussmessgeräten im Hochdruckbereich. Das können - bei äußeren Drücken - beispielsweise Tiefseeanwendungen sein, das können - bei hohen inneren Drücken - beispielsweise Anwendungen in Kraftwerksbereich sein, bei denen es oft das Erfordernis einer Sekundärumhüllung ("Secondary Containment") gibt.

Im Einzelnen gibt es nun eine Vielzahl von Möglichkeiten, das Coriolis-Massedurchflussmessgerät auszugestalten und weiterzubilden. Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel eines Coriolis-Massedurchflussmessgeräts im geöffneten Zustand,
- Fig. 2: das Ausführungsbeispiel eines Coriolis-Massedurchflussmessgeräts gemäß Fig. 1 im geschlossenen Zustand,
- Fig.3: das Ausführungsbeispiel eines Coriolis-Massedurchflussmessgeräts in geschnittener Ansicht entlang dem Schnitt A-A in Fig. 1, und
- Fig. 4: ein weiteres Ausführungsbeispiel eines Coriolis-Massedurchflussmessgeräts.

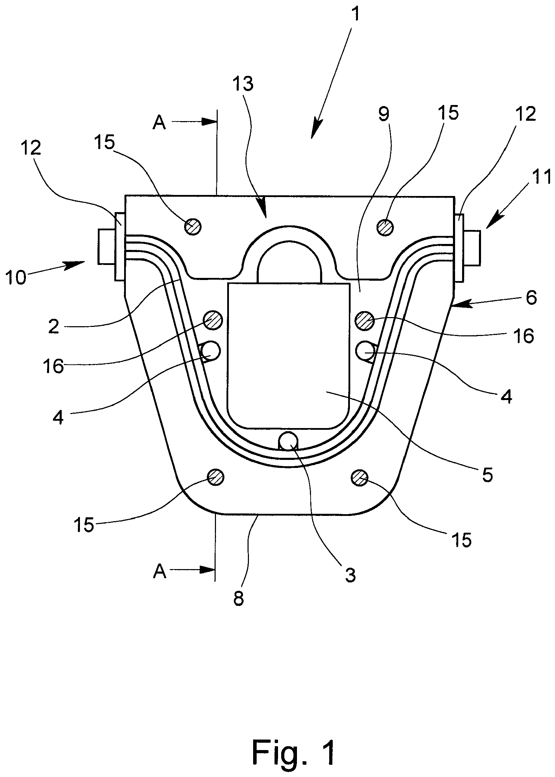

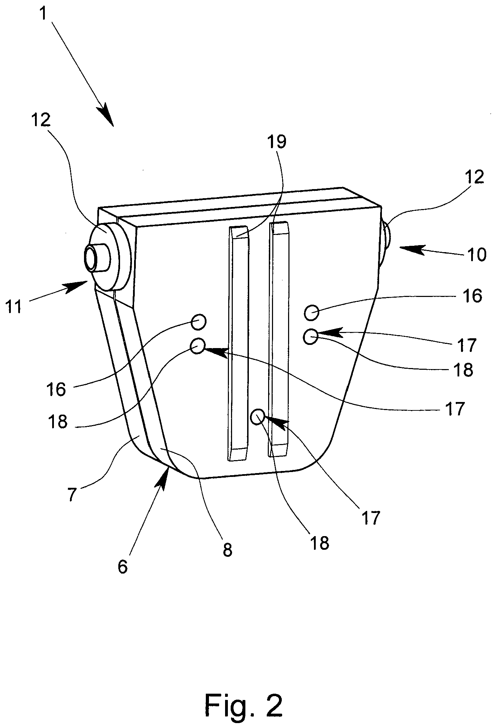

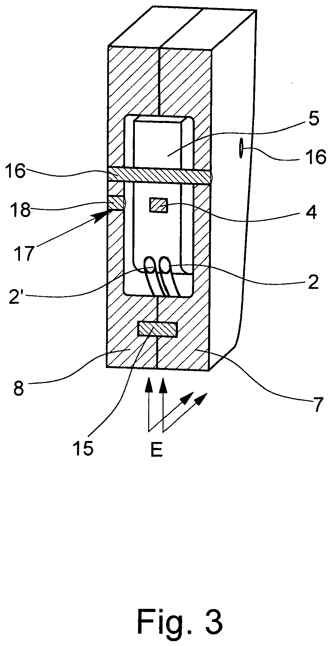

Fig. 1 zeigt ein Ausführungsbeispiel eines Coriolis-Massedurchflussmessgeräts 1 im geöffneten Zustand. Das Coriolis-Massedurchflussmessgerät 1 umfasst ein erstes gebogenes Messrohr 2 und ein zweites gebogenes Messrohr 2', wobei das zweite Messrohr 2' beispielsweise in Fig. 3 dargestellt ist. Das Coriolis-Massedurchflussmessgerät 1 umfasst einen Schwingungserzeuger 3 und zwei Schwingungsaufnehmer 4, die zumindest teilweise an dem Messrohr 2 bzw. dem Messrohr 2' befestigt sind. Zur Auswertung der Messdaten umfasst das Coriolis-Massedurchflussmessgerät 1 ferner eine Messgeräteelektronik 5, die zwischen den Bögen der Messrohre 2, 2' angeordnet ist. Das Gehäuse 6 des Coriolis-Massedurchflussmessgeräts 1 besteht aus einer - in Fig. 2 und 3 dargestellten - ersten Gehäuseschale 7 und einer zweiten Gehäuseschale 8. Die erste Gehäuseschale 7 und die zweite Gehäuseschale 8 umschließen das Messrohr 2 und auch das Messrohr 2' vollständig, so dass durch die erste Gehäuseschale 7 und die zweite Gehäuseschale 8 um die Messrohre 2, 2' ein erster druckfester Hohlraum 9 ausgebildet ist. In dem Hohlraum 9 ist neben den Messrohren 2, 2' auch die Messgeräteelektronik 5 angeordnet. Die erste Gehäuseschale 7 und die zweite Gehäuseschale 8 weisen dazu Ausnehmungen auf, durch die der Hohlraum 9 gebildet wird.

Wie Fig. 1 bis Fig. 3 zu entnehmen ist, bilden die erste Gehäuseschale 7 und die zweite Gehäuseschale 8 zwischen Einlauf 10 und Auslauf 11 der Messrohre 2, 2' einen massiven Steg 13. Am Einlauf 10 und am Auslauf 11 der Messrohre 2, 2' ist jeweils ein Flansch 12 vorgesehen, der bei diesem Ausführungsbeispiel auch als Sammler dient. Die Flansche 12 sind im Montagezustand sowohl mit der ersten Gehäuseschale 7 als auch mit der zweiten Gehäuseschale 8 verschraubt. Die erste Gehäuseschale 7 und die zweite Gehäuseschale 8 bilden am Einlauf 10 und am Auslauf 11 jeweils eine ebene Anlagefläche für die Flansche 12. Der Steg 13 realisiert eine direkte Verbindung der beiden Anlageflächen am Einlauf 10 und am Auslauf 11, so dass im Bereich der Durchführung der Messrohre zwischen den Anlageflächen kein durchgängiger Hohlraum in der direkten Verbindungslinie zwischen den beiden Anlageflächen vorhanden ist.

Fig. 2 zeigt das Ausführungsbeispiel gemäß Fig. 1 im montierten Zustand, bei dem die erste Gehäuseschale 7 und die zweite Gehäuseschale 8 an einer Fügeebene zu dem Gehäuse 6 zusammengefügt sind. Die Fügeebene der ersten Gehäuseschale 7 und der zweiten Gehäuseschale 8 ist zu den jeweils durch die Messrohrmittelachsen der Messrohre 2, 2' gebildeten Ebenen E parallel angeordnet - siehe Fig. 3. Im vorliegenden Fall - gemäß Fig. 1 bis Fig. 3 - liegt die Fügeebene exakt in der Mitte zwischen den beiden durch die Messrohrmittelachsen gebildeten Ebenen E. Wie Fig. 1 zu entnehmen ist, entspricht die Kontaktfläche zwischen erster Gehäuseschale 7 und zweiter Gehäuseschale 8 im Montagezustand etwa 35 % der Gesamtfläche des Gehäuses 6 im Querschnitt in der Fügeebene. Fig. 1 zeigt das Gehäuse 6 im geöffneten Zustand, so dass die Kontaktflächen der dargestellten zweiten Gehäuseschale 8 sichtbar sind. Die Kontaktflächen sind sämtliche Flächen im Querschnitt der zweiten Gehäuseschale 8 in der Fügeebene, die nicht mit einer Ausnehmung für den Hohlraum 9 versehen sind.

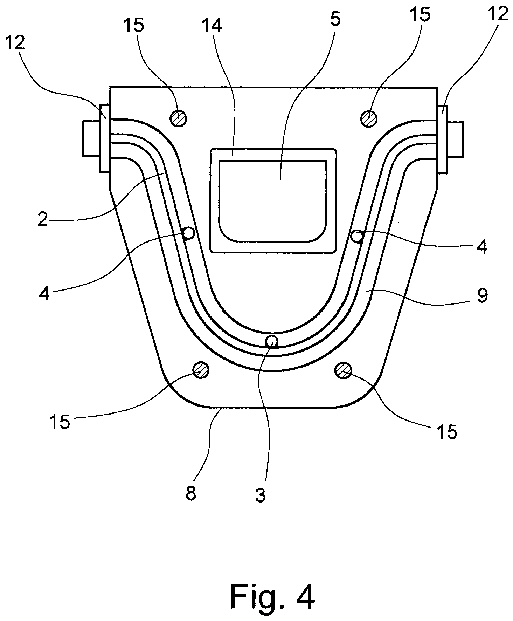

Fig. 4 zeigt ein Ausführungsbeispiel eines Coriolis-Massedurchflussmessgeräts 1 mit einem Messrohr 2, wobei an dem Messrohr 2 zumindest teilweise ein Schwingungserzeuger 3 und Schwingungsaufnehmer 4 befestigt sind. Das Messrohr 2 läuft zwischen Einlauf 10 und Auslauf 11 in einem ersten druckfesten Hohlraum 9. Am Einlauf 10 und am Auslauf 11 ist an dem Messrohr 2 jeweils ein Flansch 12 vorgesehen, der am Gehäuse 6, nämlich an der ersten Gehäuseschale 7 und an der zweiten Gehäuseschale 8, befestigt ist. Die Messgeräteelektronik 5 ist bei diesem Ausführungsbeispiel in einem zweiten druckfesten Hohlraum 14 angeordnet, der unabhängig von dem ersten druckfesten Hohlraum 9 ist, so dass beispielsweise bei einer Beschädigung des Messrohrs 2 kein Medium mit der Messgeräteelektronik 5 in Kontakt kommen kann. Sowohl der erste Hohlraum 9 als auch der zweite Hohlraum 14 weisen eine minimale Größe auf, nämlich derart, dass die Messgeräteelektronik 5 in dem zweiten Hohlraum 14 montierbar ist und das Messrohr 2 im ersten Hohlraum montier ist, wobei anschließend ein Schwingen des Messrohrs 2 ermöglicht ist. Fig. 4 zeigt das Coriolis-Massedurchflussmessgerät 1 im geöffneten Zustand, so dass lediglich die zweite Gehäuseschale 8 dargestellt ist.

Fig. 3 zeigt das Ausführungsbeispiel eines Coriolis-Massedurchflussmessgeräts gemäß Fig. 1 im Schnitt gemäß der Linie A-A in Fig. 1. Die erste Gehäuseschale 7 und die zweite Gehäuseschale 8 sind formschlüssig miteinander verbunden, indem vier Bolzen 15 in Sacklöcher in der ersten Gehäuseschale 7 und der zweiten Gehäuseschale 8 eingesteckt werden. Die Bolzen 15 dienen u. a. der Positionierung der ersten Gehäuseschale 7 relativ zur zweiten Gehäuseschale 8. Ferner sind die erste Gehäuseschale 7 und die zweite Gehäuseschale 8 mit zwei durchgehenden Schraubbolzen 16 miteinander verbunden, die in ihren beiden Endbereichen jeweils ein Gewinde aufweist. Das Gewinde wirkt mit entsprechenden Gewinden in der ersten Gehäuseschale 7 und der zweiten Gehäuseschale 8 zusammen, so dass die erste Gehäuseschale 7 und die zweite Gehäuseschale 8 mit den zwei Schraubbolzen 16 miteinander verschraubt sind. Über die Schraubbolzen 16 erfolgt im Montagezustand auch eine Kraftübertragung zwischen erster Gehäuseschale 7 und zweiter Gehäuseschale 8, die zu einer höheren Widerstandsfähigkeit des Gehäuses 6 gegen äußeren Druck beiträgt, insbesondere gegen Drücke in der Größenordnung von etwa 300 bar. Oberhalb der geschnittenen dargestellten Messrohre 2 und 2' ist der geschnittene Teil eines Schwingungsaufnehmers 4 dargestellt. Im Montagezustand ist der Schwingungsaufnehmer 4 durch eine Öffnung 17 in der zweiten Gehäuseschale 8 zugänglich, die mit einer Madenschraube 18 verschlossen ist. Die Madenschraube 18 ist über ein Gewinde in die Öffnung 17 hineingeschraubt. Wie Fig. 2 zu entnehmen, sind derartige Öffnungen 17 auch für den weiteren Schwingungsaufnehmer 4 und den Schwingungserzeuger 3 vorgesehen. Die Öffnungen 17 sind orthogonal zu der durch die Messrohrmittelachsen gebildeten Ebenen E angeordnet. Die Ebenen E sind schematisch dargestellt.

Bei sämtlichen Ausführungsbeispielen gemäß den Fig. 1 bis 4 sind die erste Gehäuseschale 7 und die zweite Gehäuseschale 8 bezüglich ihrer Grundform identisch ausgebildet. Ferner erstreckt sich, wie beispielsweise den Fig. 1 und 4 zu entnehmen, der Steg 13 zumindest teilweise in den Bereich einer gedachten direkten Verbindungslinie zwischen Einlauf 10 und Auslauf 11 des Messrohrs. Den Fig. 1 und 4 ist ferner zu entnehmen, dass die den Hohlraum 9 bzw. den Hohlraum 14 begrenzende Wandstärke in der Fügeebene im Bereich des Steges 13 zumindest teilweise größer ist als in den sonstigen Bereichen der ersten Gehäuseschale 7 und der zweiten Gehäuseschale 8. Ferner ist insbesondere der Fig. 3 zu entnehmen, dass die minimale Wandstärke des Gehäuses 6 etwa dem doppelten Messrohrdurchmesser der Messrohre 2, 2' entspricht.

Fig. 2 zeigt, dass auf der Außenfläche der zweiten Gehäuseschale 8 zwei Verstärkungsrippen 19 angeordnet sind, die zu einer gesteigerten Druckfestigkeit des Gehäuses 6, nämlich insbesondere der zweiten Gehäuseschale 8 im Bereich des Hohlraums 9, insbesondere gegen äußeren Druck, beitragen.

## Patentansprüche

1. Coriolis-Massedurchflussmessgerät (1), mit mindestens einem gebogenen Messrohr (2), mindestens einem Schwingungserzeuger (3), mindestens einem Schwingungsaufnehmer (4), mindestens einer Messgeräteelektronik (5) und einem Gehäuse (6), wobei das Gehäuse (6) eine erste Gehäuseschale (7) und eine zweite Gehäuseschale (8) umfasst, wobei die erste Gehäuseschale (7) und die zweite Gehäuseschale (8) das Messrohr (2) vollständig umschließen, so dass die erste Gehäuseschale (7) und die zweite Gehäuseschale (8) mindestens einen ersten druckfesten Hohlraum (9) um das Messrohr (2) ausbilden,
**dadurch gekennzeichnet,**
**dass** die erste Gehäuseschale (7) und die zweite Gehäuseschale (8) zwischen Einlauf (10) und Auslauf (11) des Messrohrs (2) einen Steg (13) bilden,
**dass** sich der Steg als massiver Querschnitt zwischen dem Einlauf und dem Auslauf des Messrohres erstreckt, wobei der Steg eine unmittelbare Abstützung, nämlich eine direkte und geradlinige Stützverbindung, zwischen Anschlussflächen am Einlauf und am Auslauf realisiert,und
**dass** sich der Steg (13) zumindest teilweise im Bereich einer direkten Verbindungslinie zwischen Einlauf (10) und Auslauf (11) des Messrohrs (2) erstreckt.

2. Coriolis-Massedurchflussmessgerät (1) nach Anspruch 1, **dadurch gekennzeichnet, dass** die erste Gehäuseschale (7) und die zweite Gehäuseschale (8) in einer Fügeebene zusammengefügt sind, und dass die Fügeebene parallel zu einer durch die Messrohrmittelachse gebildeten Ebene (E) verläuft.

3. Coriolis-Massedurchflussmessgerät (1) nach Anspruch 2, **dadurch gekennzeichnet, dass** die Kontaktfläche zwischen erster Gehäuseschale (7) und zweiter Gehäuseschale (8) etwa 20 % bis 60 % der Gesamtfläche des Gehäuses (6) im Querschnitt in der Fügeebene beträgt.

4. Coriolis-Massedurchflussmessgerät (1) nach einem der Ansprüche 1 bis 3, **dadurch gekennzeichnet, dass** die erste Gehäuseschale (7) und die zweite Gehäuseschale (8) einen zweiten druckfesten Hohlraum (14) ausbilden, insbesondere, dass in dem zweiten Hohlraum (14) die Messgeräteelektronik (5) angeordnet ist.

5. Coriolis-Massedurchflussmessgerät (1) nach einem der Ansprüche 1 bis 4, **dadurch gekennzeichnet, dass** der erste Hohlraum (9) und/oder der zweite Hohlraum (14) eine minimale Größe aufweisen, insbesondere, dass der erste Hohlraum (9) und/oder der zweite Hohlraum (14) das Messrohr (2) und/oder die Messgeräteelektronik (5) eng anliegend umschließt.

6. Coriolis-Massedurchflussmessgerät (1) nach einem der Ansprüche 1 bis 5, **dadurch gekennzeichnet, dass** die erste Gehäuseschale (7) und die zweite Gehäuseschale (8) zumindest teilweise formschlüssig miteinander verbunden sind, insbesondere, dass mindestens ein Bolzen (15) zwischen erster Gehäuseschale (7) und zweiter Gehäuseschale (8) vorgesehen ist.

7. Coriolis-Massedurchflussmessgerät (1) nach einem der Ansprüche 1 bis 6, **dadurch gekennzeichnet, dass** die erste Gehäuseschale (7) und die zweite Gehäuseschale (8) mit mindestens einem Schraubbolzen (16) miteinander verbunden sind, insbesondere, dass der Schraubbolzen (16) sowohl mit der ersten Gehäuseschale (7) als auch mit der zweiten Gehäuseschale (8) verschraubt ist.

8. Coriolis-Massedurchflussmessgerät (1) nach einem der Ansprüche 1 bis 7, **dadurch gekennzeichnet, dass** mindestens in der ersten Gehäuseschale (7) und/oder mindestens in der zweiten Gehäuseschale (8) mindestens eine Öffnung (17) vorgesehen ist, und dass durch die Öffnung (17) mindestens ein Schwingungserzeuger (3) und/oder mindestens ein Schwingungsaufnehmer (4) zugänglich ist, bevorzugt, dass die Öffnung (17) orthogonal zu der durch die Messrohrmittelachse des Messrohrs (2) gebildete Ebene (E) angeordnet ist.

9. Coriolis-Massedurchflussmessgerät (1) nach einem der Ansprüche 1 bis 8, **dadurch gekennzeichnet, dass** die erste Gehäuseschale (7) und die zweite Gehäuseschale (8) bezüglich ihrer Grundform identisch ausgebildet sind.

10. Coriolis-Massedurchflussmessgerät (1) nach einem der Ansprüche 1 bis 9, **dadurch gekennzeichnet, dass** die den Hohlraum (9, 14) begrenzende Wandstärke in der Fügeebene im Bereich des Steges (13) zumindest teilweise größer als in den sonstigen Bereichen der ersten Gehäuseschale (7) und/oder der zweiten Gehäuseschale (8) ist.

11. Coriolis-Massedurchflussmessgerät (1) nach einem der Ansprüche 1 bis 10, **dadurch gekennzeichnet, dass** die minimale Wandstärke des Gehäuses (6) etwa dem doppelten Messrohrdurchmesser entspricht.

12. Coriolis-Massedurchflussmessgerät (1) nach einem der Ansprüche 1 bis 11, **dadurch gekennzeichnet, dass** mindestens die erste Gehäuseschale (7) und/oder mindestens die zweite Gehäuseschale (8) mindestens eine Verstärkungsrippe (19) aufweist, insbesondere, dass die Verstärkungsrippe (19) an einer Außenfläche angeordnet ist.

## Claims

1. Coriolis mass flowmeter (1) with at least one curved measuring tube (2), at least one oscillation generator(3), at least one oscillation sensor (4), at least one measuring device electronics (5), and a housing (6), wherein the housing (6) comprises a first housing shell (7) and a second housing shell (8), wherein the first housing shell (7) and the second housing shell (8) completely surround the measuring tube (2), such that the first housing shell (7) and the second shell (8) form at least a first pressure-resistant hollow space(9) around the measuring tube (2),
**characterized in**
**that** the first housing shell (7) and the second housing shell (8) form a bridge (13) between inlet (10) and outlet (11) of the measuring tube (2),
**that** the bridge extends as a massive cross section between the inlet and the outlet of the measuring tube, wherein the bridge implements a direct support, namely a direct and straight support connection between the connection surfaces at the inlet and outlet, and
**that** the bridge (13) extends at least partially into a region of a direct connection line between the inlet (10) and the outlet (11) of the measuring tube (2).

2. Coriolis mass flowmeter (1) according to claim 1, **characterized in that** the first housing shell (7) and the second housing shell (8) are joined together at a joining plane, and that the joining plane runs parallel to a plane (E) formed by a central measuring tube axis.

3. Coriolis mass flowmeter (1) according to claim 2, **characterized in that** the area of the contact surface between the first housing shell (7) and second housing shell (8) is approximately 20% to 60% of a the overall area of the housing (6) in cross-section in the joining plane.

4. Coriolis mass flowmeter (1) according to any one of claims 1 to 3, **characterized in that** the first housing shell (7) and the second housing shell (8) form a second, pressure-resistant hollow space (14), in particular, the measuring device electronics (5) is arranged in the second hollow space (14).

5. Coriolis mass flowmeter (1) according to any one of claims 1 to 4, **characterized in that** the first hollow space (9) and/or the second hollow space (14) have a minimal size, in particular that the first hollow space (9) and/or the second hollow space (14) tightly surround(s) the measuring device electronics (5).

6. Coriolis mass flowmeter (1) according to any one of claims 1 to 5, **characterized in that** the first housing shell (7) and the second housing shell (8) are at least partially connected in a form-locking manner, in particular that at least one bolt (15) is provided between the first housing shell (7) and the second housing shell (8).

7. Coriolis mass flowmeter (1) according to any one of claims 1 to 6, **characterized in that** the first housing shell (7) and the second housing shell (8) are connected to one another by at least one screw bolt (16), in particular that the screw bolt (16) is screwed into both the first housing shell (7) and the second housing shell (8).

8. Coriolis mass flowmeter (1) according to any one of claims 1 to 7, **characterized in that** at least one opening (17) is provided at least in the first housing shell (7) and/or at least in the second housing shell (8), and that at least one oscillation generator (3) and/or at least one oscillation sensor (4) is/are accessible through the opening (17), preferably that the opening (17) is arranged orthogonal to the plane (E) formed by the central measuring tube axis of the measuring tube (2).

9. Coriolis mass flowmeter (1) according to any one of claims 1 to 8, **characterized in that** the first housing shell (7) and the second housing shell (8) are identical in respect to their basic shape.

10. Coriolis mass flowmeter (1) according to any one of claims 1 to 9, **characterized in that** the wall thickness defining the hollow space (9, 14) in the joining plane in the region of the bridge (13) is at least partially greater than in other areas of the first housing shell (7) and/or second housing shell (8).

11. Coriolis mass flowmeter (1) according to any one of claims 1 to 10, **characterized in that** the housing (6) has a minimum wall thickness that is approximately twice the diameter of the measuring tube.

12. Coriolis mass flowmeter (1) according to any one of claims 1 to 11, **characterized in that** at least the first housing shell (7) and/or the second housing shell (8) has at least one reinforcing rib (19) arranged on an outer surface.

## Revendications

1. Débitmètre massique de Coriolis (1), avec au moins un tube de mesure (2) coudé, au moins un générateur de vibrations (3), au moins un capteur de vibrations (4), au moins un système électronique d'un appareil de mesure (5) et un boîtier (6) ;
dans lequel le boîtier (6) comprend une première coque de boîtier (7) et une deuxième coque de boîtier (8) ; dans lequel la première coque de boîtier (7) et la deuxième coque de boîtier (8) entourent complètement le tube de mesure (2), de telle sorte que la première coque de boîtier (7) et la deuxième coque de boîtier (8) forment au moins une première cavité (9) qui résiste à la pression tout autour du tube de mesure (2),
**caractérisé en ce que**
la première coque de boîtier (7) et la deuxième coque de boîtier (8) forment une traverse (13) entre l'entrée (10) et la sortie (11) du tube de mesure (2); **caractérisé en ce que**
la traverse s'étend entre l'entrée et la sortie du tube de mesure sous la forme d'une section transversale massive ;
dans lequel la traverse réalise un soutien direct, à savoir une liaison de support directe et linéaire, entre des surfaces de liaison au niveau de l'entrée et au niveau de la sortie ; et
**caractérisé en ce que**
la traverse (13) s'étend, tout au moins en partie, dans la zone d'une ligne de jonction directe entre l'entrée (10) et la sortie (11) du tube de mesure (2).

2. Débitmètre massique de Coriolis (1) selon la revendication 1, **caractérisé en ce que** la première coque de boîtier (7) et la deuxième coque de boîtier (8) sont assemblées dans un plan de jointoiement, et **caractérisé en ce que** le plan de jointoiement court à la parallèle d'un plan (E) formé par l'axe central du tube de mesure.

3. Débitmètre massique de Coriolis (1) selon la revendication 2, **caractérisé en ce que** la surface de contact qui se trouve entre la première coque de boîtier (7) et la deuxième coque de boîtier (8) correspond à environ 20 % à 60 % de la surface totale du boîtier (6), dans la section transversale dans le plan de jointoiement.

4. Débitmètre massique de Coriolis (1) selon l'une des revendications 1 à 3, **caractérisé en ce que** la première coque de boîtier (7) et la deuxième coque de boîtier (8) forment une deuxième cavité (14) qui résiste à la pression, en particulier, **caractérisé en ce que** le système électronique de l'appareil de mesure (5) est disposé dans la deuxième cavité (14).

5. Débitmètre massique de Coriolis (1) selon l'une des revendications 1 à 4, **caractérisé en ce que** la première cavité (9) et/ou la deuxième cavité (14) présentent une taille minimale, en particulier, **caractérisé en ce que** la première cavité (9) et/ou la deuxième cavité (14) entourent étroitement le tube de mesure (2) et/ou le système électronique de l'appareil de mesure (5).

6. Débitmètre massique de Coriolis (1) selon l'une des revendications 1 à 5, **caractérisé en ce que** la première coque de boîtier (7) et la deuxième coque de boîtier (8) sont reliées l'une à l'autre par assemblage de forme, tout au moins en partie, en particulier, **caractérisé en ce qu'**au moins un boulon (15) est prévu entre la première coque de boîtier (7) et la deuxième coque de boîtier (8).

7. Débitmètre massique de Coriolis (1) selon l'une des revendications 1 à 6, **caractérisé en ce que** la première coque de boîtier (7) et la deuxième coque de boîtier (8) sont reliées l'une à l'autre au moyen d'au moins un bouton fileté (16), en particulier, **caractérisé en ce que** le bouton fileté (16) est vissé aussi bien à la première coque de boîtier (7) qu'à la deuxième coque de boîtier (8).

8. Débitmètre massique de Coriolis (1) selon l'une des revendications 1 à 7, **caractérisé en ce qu'**au moins une ouverture (17) est prévue au moins dans la première coque de boîtier (7) et/ou au moins dans la deuxième coque de boîtier (8), et **caractérisé en ce qu'**au moins un générateur de vibrations (3) et/ou au moins un capteur de vibrations (4) est ou sont accessibles par l'ouverture (17), de préférence, **caractérisé en ce que** l'ouverture (17) est disposée de manière orthogonale par rapport au plan (E) formé par l'axe central de tube de mesure du tube de mesure (2).

9. Débitmètre massique de Coriolis (1) selon l'une des revendications 1 à 8, **caractérisé en ce que** la première coque de boîtier (7) et la deuxième coque de boîtier (8) sont conçues de manière identique au regard de leur forme de base.

10. Débitmètre massique de Coriolis (1) selon l'une des revendications 1 à 9, **caractérisé en ce que** l'épaisseur de la paroi qui délimite la cavité (9, 14) est plus importante, tout au moins en partie, dans le plan de jointoiement dans la zone de la traverse (13), que dans les autres zones de la première coque de boîtier (7) et/ou de la deuxième coque de boîtier (8).

11. Débitmètre massique de Coriolis (1) selon l'une des revendications 1 à 10, **caractérisé en ce que** l'épaisseur minimale de la paroi du boîtier (6) correspond approximativement à deux fois le diamètre du tube de mesure.

12. Débitmètre massique de Coriolis (1) selon l'une des revendications 1 à 11, **caractérisé en ce qu'**au moins la première coque de boîtier (7) et/ou au moins la deuxième coque de boîtier (8) présentent au moins une nervure de renforcement (19), en particulier, **caractérisé en ce que** la nervure de renforcement (19) est disposée au niveau d'une surface externe.
